# EUROPEAN PATENT APPLICATION

(11) **EP 2 048 884 A1**
(43) Date of publication of application: **15.04.2009**
(21) Application number: 07817338.2
(22) Date of filing: 29.11.2007
(51) Int. Cl.: H04N 7/173

(54) **AN IPTV APPLICATION SYSTEM AND A NVOD PROGRAM'S PLAYING METHOD AND SYSTEM**

(30) Priority: 05.12.2006 CN 200610162162
(71) Applicant: Huawei Technologies Co., Ltd., Longgang District, Shenzhen Guangdong 518129 (CN)
(72) Inventor: CHEN, Yu, Shenzhen Guangdong 518129 (CN); ZHU, Pingbo, Shenzhen Guangdong 518129 (CN)
(74) Representative: Körber, Martin Hans
(86) International application number: PCT/CN2007/071148
(87) International publication number: WO 2008/067753

(57) **Abstract**

An IPTV application system and a method and system for playing near video on demand (NVoD) programs. The system for playing NVoD programs includes: an IPTV application system, adapted to create NVoD channels and generate an NVoD channel table that contains attribute information indicating whether NVoD channels support time-shifting operations; an NVoD server that intercommunicates with the IPTV application system, adapted to play a program specified by an operator in a multicast and/or unicast mode following a scheduled timetable according to control of the IPTV application system. The present invention implements time-shifting under the NVoD state and adds to user experience under the NVoD state, and in addition, provides a new channel for operators to sell on-demand programs.

## Description

### Field of the Invention

The present invention relates to communication technologies, and in particular, to an Internet Protocol Television (IPTV) application system and a method and system for playing near video on demand (NVoD) programs.

### Background of the Invention

In traditional analog TV, view behaviors of users are restricted by the program schedule. Once a program is missed, a user should wait for a rebroadcast of the program. This restriction has remained in digital TV systems based on a one-way network.

With the wide use of home video recorders and digital compact disks (CDs), a personalized video service, video on demand (VoD), which allows a user to freely specify the start time of a program and perform fast forwarding, fast rewinding, pausing and locating operations on an ongoing program, becomes an important part of the life of a common user. It is apparently an inevitable trend to adopt VoD in digital TV. The problem is that a one-way network restricts the downlink bandwidth and user interactions. In this background, a service similar to VoD appears in digital TV, allowing a user to view a video from the start after a very short time of waiting. This service is known in the industry as near VoD (NVoD).

Because the inherent two-way feature of Internet Protocol Television (IPTV) provides good support for the operation of VoD, IPTV operators demand NVoD less than digital TV. However, based on the broadcast feature ofNVoD, IPTV operators may deploy another type of service, virtual channel. With a virtual channel, an IPTV operator may organize a group of VoD programs and push the programs to all users in a multicast mode. The virtual channel service enables an operator to provide richer live channels without the addition of expensive encoders. In addition, the operator may also increase its source of revenue by inserting advertisements in the programs.

Because NVoD transports data in a multicast mode, a user is unable to interact (fast forward, fast rewind, pause and locate) in the progress of a program. This severely hinders the free use of video contents by the user.

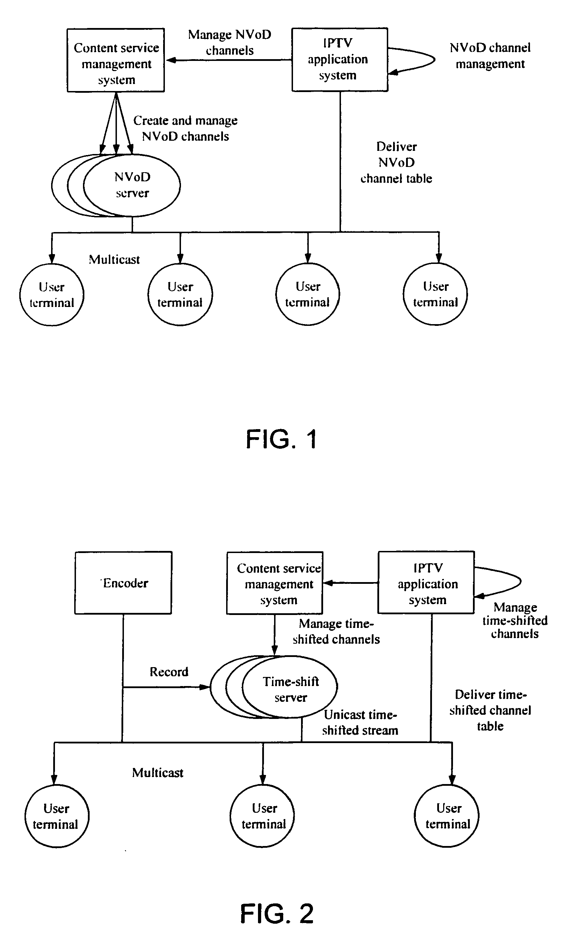

For example, a prior art presents a pure NVoD technology, with its system structure shown in Figure 1. In Figure 1, an IPTV application system creates an NVoD channel, defines the program guide of the NVoD channel and sends information of the channel and the program guide to a content service management system. The content service management system creates a corresponding channel on the NVoD server. After the NVoD channel is activated, the NVoD server plays programs in the time sequence defined in the program guide. An IPTV end user may browse the electronic program guide (EPG) page to look for and select an NVoD channel to join, or may select an NVoD channel to join from the NVoD channel table in the local cache using the number or up/down keys.

The above description shows that the prior NVoD mechanism does not support user interactions due to the following reasons:

1. NVoD streams are delivered in a multicast mode and therefore a user's interactive request is not responded; and

2. When a user is using NVoD, the IPTV user terminal does not respond to any interactive request of the user.

An IPTV system already supports a user to interact with the video service using time-shifting technology while viewing live TV.

For example, another prior art presents a live time-shifting technology, with its system structure shown in Figure 2. In Figure 2, an IPTV application system creates a live time-shifted channel and requests a content service management system to define the time-shifted channel on a time-shifted server. After the time-shifted channel is created, the time-shifted server records multicast streams from an encoder and creates media files locally for demand. For a live time-shifted channel, an IPTV user terminal is able to respond to a user request for pausing, locating, fast rewinding or fast forwarding. The IPTV user terminal changes from receiving multicast streams of a live channel to obtaining unicast streams from the time-shifted server so that the user can browse live programs freely. To support this function, the IPTV application system may deliver a time-shifted channel table which contains the physical or logical address of the time-shifted server of each channel. When the user wants to return to the multicast state, the IPTV user terminal exits the unicast stream and re-joins the multicast group corresponding to the live channel.

From the above description, it can be concluded that the foregoing live time-shifting solution is inapplicable to the interaction of NVoD due to the following reasons:

1. As programs to play on an NVoD channel are already stored in the NVoD server, the prior time-shifting solution takes up the storage space in the time-shifted server;

2. The prior time-shifted channel table does not provide sufficient information for switching from multicast over to unicast; and

3. The prior time-shifting control mechanism is incapable of effective control over VoD contents played on the NVoD channel.

Due to the above reasons, the prior NVoD interaction service is unable to support time-shifting operations.

### Summary of the Invention

Embodiments of the invention provide an Internet Protocol Television (IPTV) application system and a method and system for playing near video on demand (NVoD) programs.

The embodiments of the invention are realized through the following technical solution:

An IPTV application system includes:

a content management module, adapted to create near video on demand (NVoD) channels; and

an NVoD channel table generating module, adapted to generate an NVoD channel table that contains attribute information indicating whether NVoD channels support time-shifting operations according to information of the created NVoD channels.

A system for playing near video on demand (NVoD) programs includes:

an Internet Protocol Television (IPTV) application system, adapted to create NVoD channels and generate an NVoD channel table that contains attribute information indicating whether NVoD channels support time-shifting operations according to information of the created NVoD channels; and

an NVoD server that intercommunicate with the IPTV application system, adapted to play a program specified by an operator in a multicast and/or unicast mode following a scheduled timetable according to control of the IPTV application system.

A method for playing near video on demand (NVoD) programs includes:

creating NVoD channels;

generating an NVoD channel table that contains attribute information indicating whether NVoD channels support time-shifting operations according to information of the NVoD channels; and

controlling time-shifting operations of a user terminal according to the NVoD channel table.

A near video on demand (NVoD) method includes:

receiving, by a user terminal, an NVoD channel table delivered by an Internet Protocol Television (IPTV) application system, the NVoD channel table including attribute information indicating whether NVoD channels support time-shifting operations;

by the user terminal, obtaining a multicast address of an NVoD channel according to a user selection and the NVoD channel table and joining a corresponding NVoD multicast channel; or

by the user terminal, obtaining a unicast address of a current program of an NVoD channel according to a user selection and the NVoD channel table and interacting with an NVoD server that provides the program to obtain unicast data.

From the above description, it can be concluded that embodiments of the invention implement time-shifting under the NVoD state and improve user experience under the NVoD state, and in addition, provide a new channel for operators to sell on-demand programs.

### Brief Description of the Drawings

Figure 1 is a logic diagram of the NVoD service in a prior art;

Figure 2 is a logic diagram of the live time-shifted service in a prior art;

Figure 3 is a logic diagram of the components of a system for playing NVoD programs according to an embodiment of the invention;

Figure 4 is a schematic diagram showing the modules of an IPTV application system according to an embodiment of the invention;

Figure 5 is a flow chart showing a procedure of the method for generating an NVoD channel table according to an embodiment of the invention;

Figure 6 is a flow chart showing a procedure of the method for time-shifting operations in the process of an NVoD service according to an embodiment of the invention; and

Figure 7 is a flow chart showing a procedure of the method for switching from unicast to multicast according to an embodiment of the invention.

### Detailed Description of the Invention

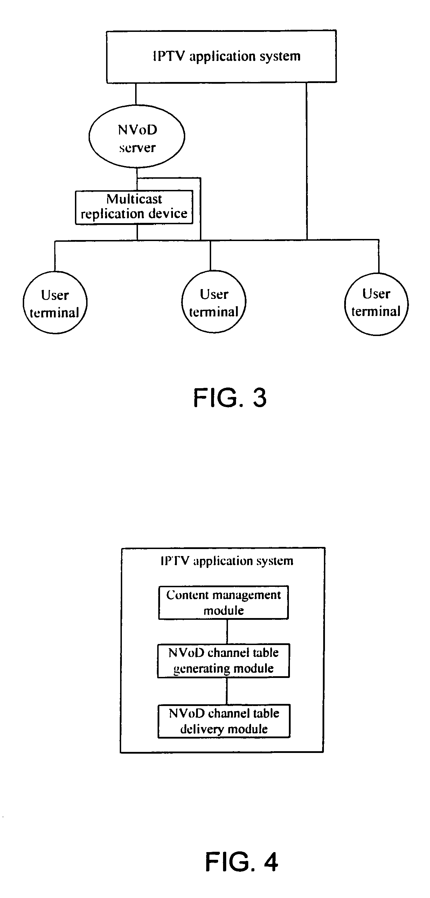

An embodiment of the invention provides a system for playing near video on demand (NVoD) programs. A logic diagram of the components of the system is shown in Figure 3. As shown in Figure 3, the system includes an IPTV application system and an NVoD server.

The IPTV application system is adapted to create NVoD channels, to generate for IPTV user terminals an NVoD channel table which contains attribute information indicating whether NVoD channels support time-shifting operations, and to support the switching of an IPTV user terminal between the multicast state of NVoD and the time-shifted (unicast) state of NVoD.

The NVoD server is adapted to play programs specified by an operator following the scheduled timetable under the control of the IPTV application system. The play modes include multicast and unicast. The NVoD server may be a VoD server or a server that is dedicated to providing NVoD service. In the unicast mode, the NVoD server delivers data to user terminals; in the multicast mode, the system for playing NVoD programs further includes:

unicast replication device on network layer, including a router and/or a switch, and adapted to replicate multicast data that the NVoD server wants to deliver to a user terminal to a downlink port associated with the user terminal.

In Figure 3, the user terminal is adapted to receive the NVoD channel table delivered by the IPTV application system, obtain the multicast address of the NVoD channel and join the NVoD multicast channel according to a user selection; or obtain from the IPTV application system the unicast address of the current program played on the NVoD channel and get unicast data by means of interaction between the multicast replication device and the NVoD server that provides the program according to a user selection.

An embodiment of the invention provides an IPTV application system. The modules of the IPTV application system are shown in Figure 4, including:

a content management module, adapted to create NVoD channels;

an NVoD channel table generating module, adapted to generate an NVoD channel table that contains attribute information indicating whether NVoD channels support time-shifting operations according to information of the NVoD channel created by the content management module; the NVoD channel includes an NVoD program guide. The attribute information indicating whether NVoD channels support time-shifting operations includes: an attribute indicating whether an NVoD channel supports time-shifting operations, an attribute indicating whether a program in the NVoD channel supports time-shifting operations and a maximum stay time in the time-shifted state. The attribute information indicating whether NVoD channels support time-shifting operations may be implemented by adding an appropriate flag in the generated NVoD channel table.

The IPTV application system further includes:

an NVoD channel table delivery module, adapted to deliver the NVoD channel table that contains attribute information indicating whether NVoD channels support time-shifting operations to a user terminal and an NVoD server.

An embodiment of the invention provides a method for playing NVoD programs. According to the method, an IPTV application system creates an NVoD channel and generates an NVoD channel table, including an NVoD program guide, according to information of the created NVoD channel. The NVoD channel table includes attribute information indicating whether NVoD channels support time-shifting operations. The IPTV application system delivers the generated NVoD channel table to a user terminal and an NVoD server. The user terminal obtains the address of an NVoD channel according to a user selection so as to join the corresponding multicast channel or obtain unicast data.

When the NVoD channel is so identified as not to support time-shifting operations, the user terminal will not respond to a time-shifting operation request sent by the user or alert the user of an invalid operation on the terminal screen. If the NVoD channel supports time-shifting operations, the user terminal forwards an interaction request initiated by the user to the IPTV application system, which determines whether the user is entitled to time-shifting operations. If the user is not entitled, the IPTV application system prompts the user to buy the service; if the user is entitled to the service, the IPTV application system returns the ingress address of a unicast request. The user terminal switches from multicast to unicast according to video information collected locally and the information returned by the IPTV application system. The user terminal may also control switching back to multicast from unicast in a specified state.

The following details the method for playing NVoD programs with reference to an embodiment.

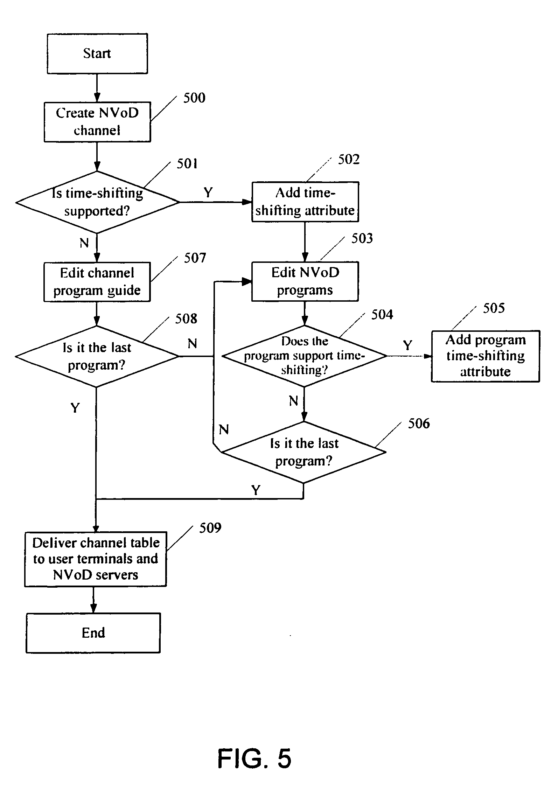

Figure 5 shows a procedure where the IPTV application system creates an NVoD channel and generates an NVoD channel table according to information of the NVoD channel. The procedure includes the following steps:

500. Create an NVoD channel;

501. Determine whether the NVoD channel supports time-shifting operations according to the creator requirement and proceed with step 502 if the channel supports time-shifting operations, or else proceed with step 507;

502. Add a time-shifting attribute for the NVoD channel; for example, add a flag indicating whether the NVoD channel supports time-shifting operations;

503. Edit programs of the NVoD channel;

504. Determine whether a program supports time-shifting operations according to the creator requirement and proceed with step 505 if the program supports time-shifting operations, or else proceed with step 506;

505. Add a time-shifting attribute for the program; for example, add a flag indicating whether the program supports time-shifting operations;

506. Determine whether the program is the last program and if so, proceed with step 509, or else proceed with step 503;

507. Edit the program guide of the NVoD channel;

508. Determine whether the program is the last program and if so, proceed with step 509, or else proceed with step 503; and

509. Deliver the channel table to user terminals and NVoD servers and activate the NVoD channel.

When the operator modifies the time-shifting attribute of an NVoD channel on the IPTV application system, the IPTV application system updates the live channel table cached in every user terminal currently online.

A procedure for using time-shifting when an NVoD service is ongoing is as follows:

After a user terminal logs in and is authenticated successfully, the IPTV application system delivers a live channel table that contains NVoD channel information to the user terminal. In the live channel table, each NVoD channel contains a flag indicating whether interactive operations are supported.

When a user selects a pausing, locating or fast rewinding operation via a remote controller or another input device in the progress of viewing an NVoD channel, the user terminal checks whether the NVoD channel supports interactive operations by referring to the channel table in the local cache. If interactive operations are not supported, the user terminal does not respond to the user request or alerts the user that the operation is invalid. If interactive operations are supported, the user terminal sends an NVoD unicast request to the IPTV application system. The request message includes the user ID, the NVoD channel ID and the current time.

Upon reception of the request, the IPTV application system determines whether the user is entitled to interactive operations on the NVoD channel. If the user is not entitled, the IPTV application system prompts the user to buy the right. If the user is entitled, or has gone through an authorization check or purchase procedure, the IPTV application system generates a response message according to the NVoD channel ID and the current time in the user request. The response message includes the unicast ingress address of the ongoing program on the NVoD channel. When the operator inserts advertisements on the NVoD channel, to prevent a user from skipping advertisements by means of an interactive operation, the ingress address returned by the IPTV application system may be a list, which includes the uniform resource identifiers (URIs) of VoD programs and multiple advertisement clips and the play sequence of the programs and clips.

After the user terminal receives the response message, the user terminal sets up a connection with the NVoD server to receive the unicast media stream. The connection with the NVoD server may be established via the Real Time Streaming Protocol (RTSP). To guarantee smooth switching from multicast to unicast, the user terminal sends the time stamp information of the last data frame received in the multicast mode to the NVoD server. For example, the user terminal may send the time stamp information of the last data frame received in the multicast mode to the NVoD server via RTSP. The NVoD server sends unicast data starting with the data frame following the last frame received by the user terminal.

In the unicast progress, the user terminal may use interactive operations similar to that in the VoD application and supports fast forwarding, fast rewinding, pausing and locating operations. In addition, the foregoing operations are limited to the length of the program. This means, the user may at most move backward to or locate a position as far as the header of a file and move forward to or locate a position as far as the end of the file.

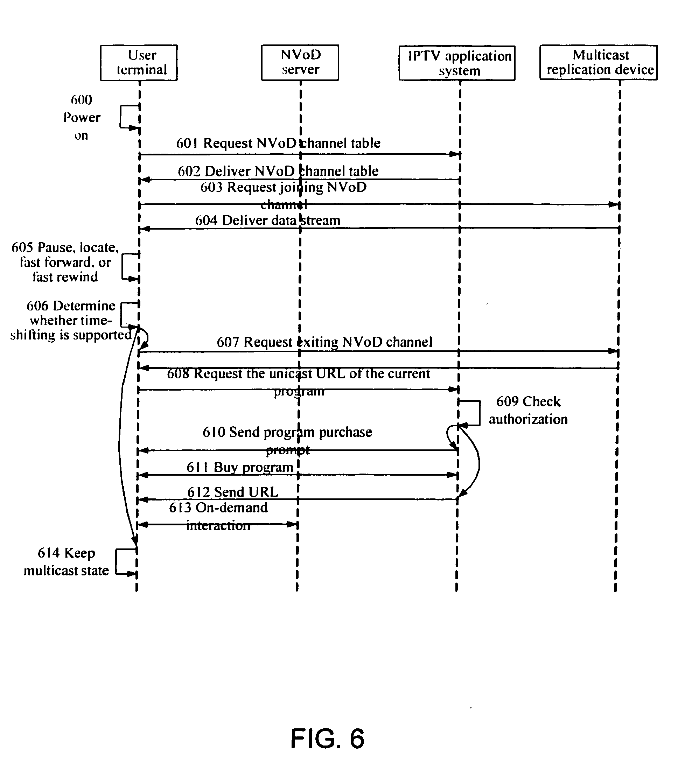

Figure 6 shows a procedure where a time-shifting operation is carried out in the progress of an NVoD service according to an embodiment of the invention. The procedure includes the following steps:

600. A user terminal is turned on and logs in, and is authenticated successfully;

601. The user terminal requests from the IPTV application system an NVoD channel table, including a program guide of the NVoD channel;

602. The IPTV application system delivers the NVoD channel table to the user terminal;

603. The user terminal joins a multicast group corresponding to the NVoD channel according to a user selection;

604. A multicast replication device replicates multicast data corresponding to the NVoD channel to the downlink port associated with the user terminal according to the request of the user terminal;

605. The user uses a control device like a remote controller, selects fast forwarding, fast rewinding, pausing or locating operation on the user terminal;

606. The user terminal determines whether the current program supports time-shifting according to the NVoD channel table and the program guide cached locally; if the current program supports time-shifting operations, proceed with step 607, or else proceed with step 614;

607. The user terminal requests leaving a multicast group corresponding to the NVoD channel according to the user selection;

The multicast replication device that receives the request stops sending the multicast data. If the user requesting joining another multicast group, the multicast replication device sends the other multicast data to the user terminal; if the user request leaving all multicast groups, the multicast replication device stops sending any multicast data to the user terminal.

608. The user terminal requests from the IPTV application system the unicast uniform resource locator (URL) corresponding to the current program;

609. The IPTV application system checks whether the user is entitled to the program. if the user is not entitled, goes to step 610, or else to step 612;

610. The IPTV application system sends a program purchase prompt;

611. The user terminal interacts with the IPTV application system to complete the purchase of the program;

612. The IPTV application system sends the unicast URL of the program requested by the user terminal;

613. The IPTV user terminal interacts with the VoD server according to the unicast URL of the program and the PCR of the current position of the program so that the VoD server starts fast forwarding, fast rewinding or normal playing from the specified position.

To guarantee that the user terminal is able to return from the unicast state to the multicast state, the user terminal may set the current state to time-shifted when switching from multicast to unicast and record the NVoD channel ID corresponding to the time-shifted program.

614. If the current channel or current program does not support time-shifting, the IPTV user terminal alerts the user that a fast forwarding, fast rewinding, pausing or locating operation is invalid and the IPTV user terminal continues staying in the multicast group.

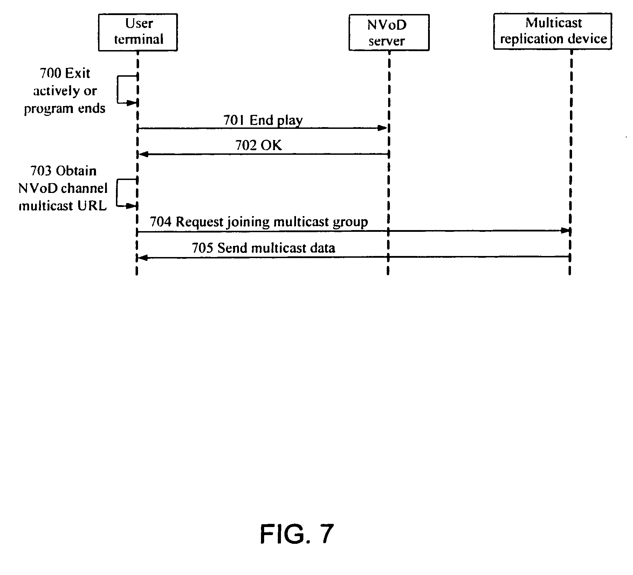

In the foregoing procedure, the user enters unicast from multicast. When the user wants to exit unicast or when it goes to the program end via normal playing, fast forwarding or locating, the user terminal switches back to the multicast state. A switchback procedure according to an embodiment of the invention is shown in Figure 7. The procedure includes the following steps:

700. The user selects to return to multicast on the user terminal or the unicast play comes to an end;

701. The user terminal sends an End Play request to the NVoD server;

702. The NVoD server returns an OK and the user terminal exits the unicast state;

703. The user terminal obtains the multicast URL corresponding to the NVoD channel according to the NVoD channel table in the local cache;

To guarantee that the user terminal is able to return from the unicast state to the multicast state, the user terminal may set the current state to time-shifted when switching from multicast to unicast and record the NVoD channel ID corresponding to the time-shifted program.

704. The user terminal joins a multicast group corresponding to the NVoD channel according to the user selection; and

705. A multicast replication device replicates multicast data corresponding to the NVoD channel to the downlink port associated with the user terminal according to the request of the user terminal.

In addition to active exit and normal end of playing, the time-shifting control of the NVoD channel may set the longest time that the user may stay in the time-shifted state. To implement this control, a parameter indicating the maximum stay time in the time-shifted state may be added, and delivered to the user terminal together with the channel table. When the state of user terminal changes from multicast to unicast, a timer is activated according to the maximum stay time in the channel table. When the time expires, the user terminal exits unicast, returns to multicast according to the method shown in Figure 7 and prompts the user.

From the above description, it may be concluded that embodiments of the invention implement time-shifting under the NVoD state and improve user experience, and in addition, provide a new channel for operators to sell on-demand programs.

Although the technical scheme of the present invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. An Internet Protocol Television (IPTV) application system, comprising:
a content management module, adapted to create near video on demand (NVoD) channels; and
an NVoD channel table generating module, adapted to generate an NVoD channel table that contains attribute information indicating whether NVoD channels support time-shifting operations according to information of the created NVoD channels.

2. The system of claim 1, further comprising:
an NVoD channel table delivery module, adapted to deliver the NVoD channel table that contains attribute information indicating whether NVoD channels support time-shifting operations.

3. A system for playing near video on demand (NVoD) programs, comprising:
an Internet Protocol Television (IPTV) application system, adapted to create NVoD channels and generate an NVoD channel table that contains attribute information indicating whether NVoD channels support time-shifting operations according to information of the created NVoD channels; and
an NVoD server intercommunicates with the IPTV application system, adapted to play a program specified by an operator in a multicast and/or unicast mode following a scheduled timetable according to control of the IPTV application system.

4. The system of claim 3, wherein the NVoD server is:
a video on demand (VoD) server or a server that is dedicated to providing NVoD service.

5. The system of claim 3, further comprising:
a multicast replication device, adapted to replicate multicast data to be played by the NVoD server to a downlink port associated with a user terminal.

6. A method for playing near video on demand (NVoD) programs, comprising:
creating NVoD channels;
generating an NVoD channel table that contains attribute information indicating whether NVoD channels support time-shifting operations according to information of the NVoD channels; and
controlling time-shifting operations of a user terminal according to the NVoD channel table.

7. The method of claim 6, wherein the attribute information indicating whether NVoD channels support time-shifting operations comprises: an attribute indicating whether an NVoD channel supports time-shifting operations, an attribute indicating whether a program in the NVoD channel supports time-shifting operations and a maximum stay time in the time-shifted state.

8. The method of claim 7, wherein the attribute information indicating whether NVoD channels support time-shifting operations is implemented by adding a corresponding flag indicating whether an NVoD channel supports time-shifting operations in the generated NVoD channel table.

9. The method of claim 6, 7 or 8, wherein the method for generating the NVoD channel table comprises:
determining whether an NVoD channel supports time-shifting operations and if the NVoD channel supports time-shifting, adding a time-shifting support flag for the NVoD channel; and
determining whether a program of the time-shifted NVoD channel supports time-shifting operations and if the program supports time-shifting, adding a time-shifting support flag for the program.

10. The method of claim 6, wherein, after generating an NVoD channel table that contains attribute information indicating whether NVoD channels support time-shifting operations, the method further comprises:
delivering the NVoD channel table that contains attribute information indicating whether NVoD channels support time-shifting operations to a user terminal and an NVoD server.

11. The method of claim 10, wherein, when the time-shifting support attribute information of an NVoD channel in the NVoD channel table changes, the method further comprises:
updating the NVoD channel table that is delivered to the user terminal and the NVoD server.

12. The method of claim 7, wherein the controlling time-shifting operations of a user terminal according to the NVoD channel table comprises:
receiving a time-shifting operation request from the user terminal;
determining whether the user sending the time-shifting operation request is entitled to time-shifting operations on the NVoD channel and if the user is not entitled, prompting the user to buy the entitlement or alerts the user that the operation is invalid; and
responding to the time-shifting operation request if the user is entitled or after the user buys the entitlement.

13. A near video on demand (NVoD) method, comprising:
receiving, by a user terminal, an NVoD channel table delivered by an Internet Protocol Television (IPTV) application system; the NVoD channel table comprising attribute information indicating whether NVoD channels support time-shifting operations; and
by the user terminal, obtaining a multicast address of an NVoD channel according to a user selection and the NVoD channel table and joining the corresponding NVoD multicast channel; or
by the user terminal, obtaining a unicast address of a current program of an NVoD channel according to a user selection and the NVoD channel table and interacting with an NVoD server that provides the program to obtain unicast data.

14. The method of claim 13, wherein the obtaining a unicast address of a current program of an NVoD channel according to a user selection and the NVoD channel table and interacting with an NVoD server that provides the program to obtain unicast data comprises:
receiving, by the user terminal, a time-shifting operation request of the user for entering unicast state;
by the user terminal, determining whether the NVoD channel supports time-shifting operations according a locally cached NVoD channel table and if the NVoD channel supports time-shifting operations, sending the request to the IPTV application system; and
receiving a response that carries a unicast ingress address of the current ongoing program delivered by the IPTV application system and intercommunicating with an NVoD server that provides the program according to the unicast ingress address to obtain unicast data.

15. The method of claim 14, wherein the response that carries a unicast ingress address is a list which contains a program demanded by the user and advertisement clips and a play sequence of the program and the advertisement clips.

16. The method of claim 14, wherein the request message sent by the user terminal to the IPTV application system comprises:
a user ID, an NVoD channel ID and a current time.

17. The method of claim 14, wherein the method for intercommunicating with an NVoD server that provides the program according to the unicast ingress address to obtain unicast data comprises:
sending, by the user terminal, time stamp information of the last data frame received in multicast mode to the NVoD server; and
receiving unicast data sent by the NVoD server starting with a data frame next to the current last frame of the user terminal.

18. The method of claim 14, wherein, after the user terminal enters unicast, the method further comprises:
by the user terminal, setting the current state to a time-shifted state and recording an NVoD channel ID corresponding to the time-shifted program.

19. The method of claim 13, wherein, the method for entering multicast state from unicast state comprises:
receiving, by the user terminal, a request of the user for entering multicast or the unicast play going to an end;
sending, by the user terminal, an End Play request to the NVoD server;
by the user terminal, receiving an affirmative response from the NVoD server and exiting the unicast state; and
entering, by the user terminal, an appropriate multicast group according to the time-shifted state and the NVoD channel ID corresponding to the time-shifted program recorded at the time of switching from multicast to unicast.

20. The method of claim 19, wherein scenarios where the unicast play ends comprise:
activating, by the user terminal, a timer according to the maximum stay time in the time-shifted state in the channel table when entering unicast from multicast; and
the unicast play going to an end when the timer expires.
